# EUROPEAN PATENT APPLICATION

(11) **EP 3 820 129 A1**
(43) Date of publication of application: **12.05.2021**
(21) Application number: 18925067.3
(22) Date of filing: 02.07.2018
(51) Int. Cl.: H04M 1/725, H04N 5/232

(54) **METHOD AND APPARATUS FOR VIDEO RECORDING AND PROCESSING, AND VIDEO RECORDING AND PROCESSING SYSTEM**

(71) Applicant: SZ DJI Technology Co., Ltd., Shenzhen, Guangdong 518057 (CN)
(72) Inventor: TAO, Ye, Shenzhen Guangdong 518057 (CN); WU, Dan, Shenzhen Guangdong 518057 (CN)
(74) Representative: Goddar, Heinz J.
(86) International application number: PCT/CN2018/094006
(87) International publication number: WO 2020/006657

(57) **Abstract**

A video photographing processing method, a video photographing processing apparatus, and a video photographing processing system. The video photographing processing method includes: establishing a communication connection between a photographing apparatus and an external processing apparatus, sending, by the photographing apparatus, obtained first video data to the external processing apparatus; sending, by the photographing apparatus, a processing instruction to the external processing apparatus, the processing instruction instructing the external processing apparatus to process the first video data, and processing, by the external processing apparatus, the first video data according to the processing instruction.

## Description

### TECHNICAL FIELD

The present disclosure relates to a video photographing processing method, a video photographing processing apparatus, and a video photographing processing system.

### BACKGROUND

Currently, cameras, especially small and light-weight camera products, e.g., sports cameras and aerial cameras, have reached the ability to output high-quality and full high definition (HD) 1080p video streams.

However, due to requirements on the volume and weight, or because battery life needs to be prioritized as much as possible, these camera products cannot be equipped with a very high-performance processor. Therefore, generally, when photographing is performed, video information is directly stored locally in the camera via a DSP. Limited by a processing capacity, an output video stream for monitoring is only be sent as a low-definition video to the human-machine interface/HDMI monitor of the mobile phone application by performing compression and down sampling via rate control, and the like.

Limited by hardware, the camera products only perform some simple filter processing in the DSP, such as applying a formulated LUT for color changes, and the like, and cannot achieve complex effects such as beautification and complex filters requiring relatively high computing power. The tendency is particularly obvious, especially for a photographing apparatus outputting a high-definition video,

Nowadays, due to an increasing demand for entertainment, more and more users are beginning to apply more advanced processing such as beautification or complex filters to the video during short video photographing, self-portrait, or live broadcast. With the rapid development of the performance of terminals led by mobile phones, mobile phones have reached the ability to perform the complex processing on the video streams, and can output videos that have undergone complex filter processing and beautification processing. However, mobile phones cannot replace cameras such as sports cameras and aerial cameras to photograph certain scenes.

### SUMMARY

Therefore, the present disclosure is proposed. The purpose of the present disclosure is to use a terminal such as a mobile phone to share large amounts of processing and complex processing to obtain high-quality video streams with complex effects, thereby satisfying user's needs to watch high-quality video streams with complex effects from small, light-weight cameras such as sports cameras and aerial cameras.

One aspect of the present disclosure provides a video photographing processing method including: establishing a communication connection between a photographing apparatus and an external processing apparatus, sending, by the photographing apparatus, obtained first video data to the external processing apparatus, sending, by the photographing apparatus, a processing instruction to the external processing apparatus, the processing instruction used to instruct the external processing apparatus to process the first video data, and processing, by the external processing apparatus, the first video data according to the processing instruction.

A video photographing processing method applied to the photographing apparatus capable of establishing the communication connection with the external processing apparatus, including: establishing the communication connection with the external processing apparatus, obtaining the first video data, sending the first video data to the external processing apparatus, and sending the processing instruction to the external processing apparatus. The processing instruction is used to instruct the external processing apparatus to process the first video data.

Another aspect of the present disclosure provides a video photographing processing method applied to the external processing apparatus capable of establishing the communication connection with the photographing apparatus. The video photographing processing method includes: establishing the communication connection with the photographing apparatus, receiving the first video data sent from the photographing apparatus, receiving the processing instruction sent by the photographing apparatus, the processing instruction used to instruct to process the first video data, and processing the first video data according to the processing instruction.

Another aspect of the present disclosure provides a photographing apparatus capable of establishing the communication connection with the external processing apparatus, including: a processing circuit configured to obtain the first video data, and a communication circuit configured to send the first video data to the external processing apparatus and send the processing instruction to the external processing apparatus. The processing instruction is used to instruct the external processing apparatus to process the first video data.

Another aspect of the present disclosure provides an external processing apparatus capable of establishing the communication connection with the photographing apparatus, including: a communication circuit receiving the first video data sent from the photographing apparatus, and receiving the processing instruction sent from the photographing apparatus, the processing instruction used to instruct to process the first video data, and a processing circuit processing the first video data according to the processing instruction.

Another aspect of the present disclosure provides a video photographing processing system including the photographing apparatus and the external processing apparatus. The photographing apparatus and the external processing apparatus can establish the communication connection. The photographing apparatus includes: a photographing-apparatus-side processing circuit configured to obtain the first video data, a photographing-apparatus-side communication circuit configured to send the first video data to the external processing apparatus and send the processing instruction to the external processing apparatus. The processing instruction is used to instruct the external processing apparatus to process the first video data. The external processing apparatus includes: an external-processing-apparatus-side communication circuit receiving the first video data sent from the photographing apparatus and receiving the processing instruction sent from the photographing apparatus, and the external-processing-apparatus-side processing circuit processing the first video data according to the processing instruction.

According to the present disclosure, a terminal such as a mobile phone can be used to share a large amount of processing and complex processing to obtain a high-quality video stream with complex effects, thereby satisfying the user's needs to watch high-quality video streams with complex effects from small, light-weight cameras such as sports cameras and aerial cameras.

An effect of the present disclosure is particularly better for a photographing apparatus outputting the high-definition video.

### BRIEF DESCRIPTION OF THE DRAWINGS

FIG. 1 is a conceptual diagram schematically showing a photographing processing system of the present disclosure.
FIG. 2 is a flowchart showing a photographing processing method of the present disclosure.
FIG. 3 is a flowchart showing a photographing-apparatus-side processing method in a photographing processing method of the present disclosure.
FIG. 4 is a flowchart showing an external-processing-apparatus-side processing method in a photographing processing method of the present disclosure.
FIG. 5 is a block diagram showing a photographing processing system of the present disclosure.

### DETAILED DESCRIPTION OF THE EMBODIMENTS

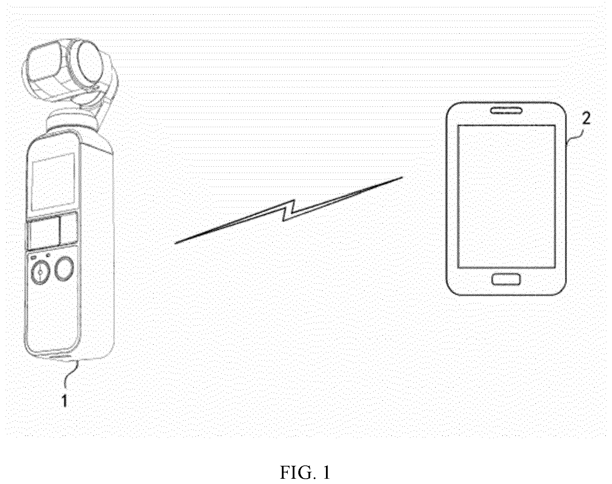

FIG. 1 is a conceptual diagram schematically showing a photographing processing system of the present disclosure. As shown in FIG. 1, the photographing processing system includes a photographing apparatus 1 and an external processing apparatus 2. The photographing apparatus 1 includes functional units for photographing (e.g., a camera, a photographing member, related circuits, and the like) and other functional units (e.g., a housing member, a mechanical member, a communication module, and the like).

The external processing apparatus 2 can refer to a device configured to process video data sent from the photographing apparatus 1 via a communication connection, and separate from the photographing apparatus 1.

The photographing apparatus 1 in FIG. 1 is a handheld gimbal camera including a gimbal and a camera (equivalent to an image acquisition device) arranged at the gimbal. A photographing angle of the camera can be adjusted by adjusting an attitude of the gimbal.

The external processing apparatus 2 in FIG. 1 is a mobile phone. The handheld gimbal camera can be plugged into a charging port of the mobile phone (e.g., iOS/Android) via a detachable interface accessory or can be plugged into the mobile phone indirectly via an interface adapter. Thus, they can establish the communication connection. In another situation, they can also establish the connection via a wireless communication, such as WiFi, Bluetooth, NFC, and the like. An application program for processing the video data can be installed in the mobile phone, and the application program can be executed by the processor of the mobile phone to process the video data.

In FIG. 1, the photographing apparatus 1 is showed as the handheld gimbal camera, which is merely an example and is not limited herein. The photographing apparatus 1 may be another existing device, such as a sports camera, an aerial camera, or the like, as long as it can photograph video and establish the communication connection with the external processing apparatus 2.

In FIG. 1, a handle is shown as a mobile platform carrying the gimbal, which is merely an example and is not limited herein. The mobile platform may also be an unmanned aerial vehicle (UAV), a remote-control vehicle, or the like.

Regarding the communication connection, a communication connection of existing technologies can be used. It can be a wireless connection, such as a Wi-Fi, a mobile network, and the like, or a wired connection (including a connection via a data line and a connection via an interface adapter, and the like), such as USB2.0, USB3.0, and the like. It is also possible that the photographing apparatus 1 and the external processing apparatus 2 can be respectively connected to an Internet via the wireless network, and the connection between them can be realized via the Internet to send data. As long as the communication connection can satisfy the video transmission requirements, it can be used in the present disclosure.

In FIG. 1, the external processing apparatus 2 is shown as a mobile phone, which is merely an example and is not limited herein. The external processing apparatus 2 may be another existing device, such as a tablet computer as a mobile terminal, or a desktop personal computer, as long as it can process the video data from the photographing apparatus 1 and can establish the connection with the photographing apparatus 1 via the communication (including a wired network, a wireless network, the Internet, and the like).

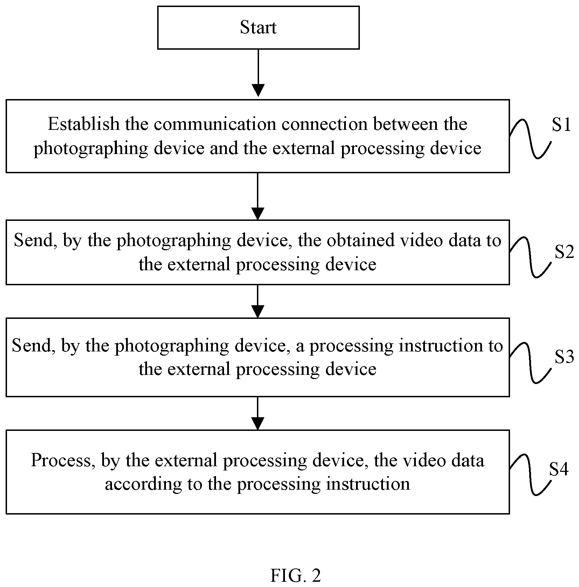

Hereinafter, the photographing processing method of the present disclosure is described with reference to FIG. 2. FIG. 2 is a flowchart showing the photographing processing method of the present disclosure.

The photographing processing method of the present disclosure includes: establishing the communication connection between the photographing apparatus and the external processing apparatus (S1), sending, by the photographing apparatus, the obtained video data to the external processing apparatus (S2), sending, by the photographing apparatus, a processing instruction to the external processing apparatus (S3), and processing, by the external processing apparatus, the video data according to the processing instruction (S4).

If a video recording start instruction is provided, the photographing processing method of the present disclosure can be started. The video recording start instruction can be provided on the photographing apparatus 1, for example, can be turned on from a displayed menu on a screen of the photographing apparatus 1, or can be turned on via an operation button on it. It can also be provided on the external processing apparatus 2, for example, can be turned on from a displayed menu on a screen of the external processing apparatus 2, or can be turned on via an operation button on it (e.g., double-press a volume key/lock screen key of the mobile phone, and the like, it can be set according to a specific type of the device). It can also be provided via a communication of a device other than them.

Hereinafter, each step of the photographing processing method of the present disclosure will be described in detail.

At S1, the photographing apparatus establishes the communication connection with the external processing apparatus.

In some embodiments, after the video recording start instruction is provided, the photographing apparatus 1 and the external processing apparatus 2 can establish the communication connection. The communication connection can be a wired connection via a data cable or a plug-in interface, or a wireless connection such as WiFi, Bluetooth, NFC, and the like. In some cases, a communication connection confirmation process may be required by the photographing apparatus 1 and the external processing apparatus 2, i.e., clicking to confirm the connection on one or both of the devices to complete the communication connection. In other cases, the photographing apparatus 1 and the external processing apparatus 2 may not require the communication connection confirmation process. For example, the external processing apparatus 2 has been configured to use by the photographing apparatus 1. When the video recording start instruction is provided, the communication connection between them can be automatically completed.

In some other embodiments, it is also possible to always maintain the communication connection between the photographing apparatus 1 and the external processing apparatus 2, and after the start instruction is provided, the processing after step S2 can be started.

At S2, the photographing apparatus sends the obtained video data to the external processing apparatus.

In a state that the communication connection is established between the photographing apparatus 1 and the external processing apparatus 2, the photographing apparatus 1 can shoot, and original video data can be obtained by a photographing member. The original video data can refer to video images obtained by the photographing member, e.g., a CMOS image sensor, a CCD image sensor, and the like, and converted into video data of electrical signals. Then, a processing circuit (including a processor, an encoder, and the like) of the photographing apparatus 1 can perform a first processing operation on the original video data to obtain the first video data. The first processing operation can refer to a processing operation performed on the original video data directly obtained by an image sensor in the processing circuit of the photographing apparatus 1, for example, compression encoding the original video data to generate an encoded transmission video stream. In some embodiments, the compression encoding herein may be H.264 and H.265 standard compression encoding, and the corresponding first video data is H.264 and H.265 video streams. Of course, other compression encoding algorithms can also be used as needed.

In addition, the first processing operation may also include performing image editing processing on the original video data, and then performing the compression encoding, or performing the image editing processing on the compression encoded video data to obtain the first video data. For example, the processing circuit of the photographing apparatus 1 may perform cropping processing on image frames of the original video data.

In some cases, the photographing apparatus 1 can be a sports camera or a gimbal camera, which cannot use a processor having a stronger processing capability due to volume limitations or cost limitations. Due to hardware limitations, the photographing apparatus 1 can only perform the processing with relatively low processing capabilities, but cannot implement advanced functions such as beautification, complex filters, special effects overlay, and the like. Therefore, the photographing apparatus 1 can send the obtained first video data to the external processing apparatus 2 via the communication connection. For example, a small gimbal camera detachably plugged into a mobile phone can send the first video data to the mobile phone via a data port, or a gimbal camera establishing a WiFi/Bluetooth/NFC communication connection with the mobile phone via a wireless communication can send the first video data to the mobile phone.

During a transmission of the first video data, a storage function of the photographing apparatus 1 can be turned off, and the first video data is not stored in the photographing apparatus 1, such that the processing capability of the photographing apparatus 1 can be more concentrated on the transmission of the first video data. That is, the processing capability of the processor of the photographing apparatus 1 can be used for the compression encoding and image transmission, thereby enabling a higher-definition video data transmission.

At S3, the photographing apparatus sends the processing instruction to the external processing apparatus.

In this step, the user may operate the photographing apparatus 1 to send the processing instruction to the external processing apparatus 2 or the photographing apparatus 1 may automatically push the processing instruction to the external processing apparatus 2. For example, a user can use the photographing apparatus 1 (e.g., a gimbal camera) to photograph a video, and the photographing apparatus 1 can send the first video data to the external processing apparatus 2 (e.g., a mobile phone) via the communication connection. During the transmission process, or before or after the transmission process, the user can operate the photographing apparatus 1, e.g., a key operation or touch screen operation, to send the processing instruction to the external processing apparatus 2. The processing instruction can be used to instruct the external processing apparatus to perform a second processing operation on the first video data.

A sequence between step S2 and step S3 is not limited, i.e., the photographing apparatus 1 may first send the processing instruction to the external processing apparatus, and then send the first video data to the external processing apparatus 2, or vice versa. In addition, it is also possible to send the processing instruction to the external processing apparatus 2 while starting to send the first video data.

At S4, the external processing apparatus processes the video data according to the processing instruction.

The external processing apparatus 2 that has received the processing instruction can perform the second processing operation on the first video data.

The second processing operation can be different from the first processing operation, and the second processing operation can occupy more computing resources of the processor than the first processing operation, such as beautification processing, filter processing, special effect overlay processing, and the like.

When a high-definition video is being processed, a lot of computing resources will be occupied and a greater power will be consumed. Therefore, a function capable of executing the second processing operation is not provided in the photographing apparatus 1, but the function is executed in the external processing apparatus 2 such as a mobile phone.

After performing the second processing operation on the first video data, the external processing apparatus 2 can generate second video data on the basis of the first video data processed with, for example, the beautification processing, filter processing, special effect overlay processing, and the like.

The external processing apparatus 2 can store the second video data in its internal storage space, or may also upload the second video data to a cloud space on a network for storage. The storage may be executed according to a storage instruction from the photographing apparatus 1 or may be automatically executed by the external processing apparatus 2.

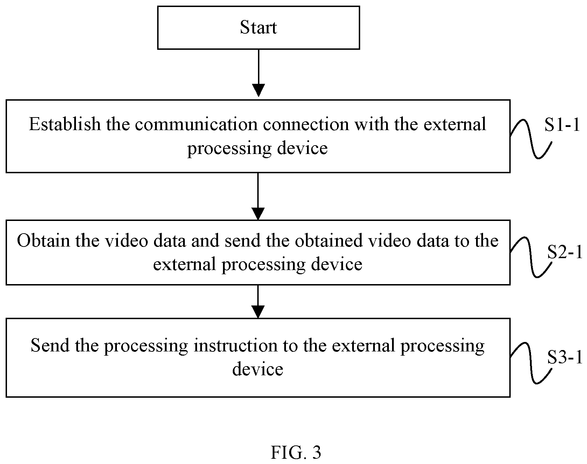

Hereinafter, the processing performed on the side of the photographing apparatus 1 will be described with reference to FIG. 3. FIG. 3 is a flowchart showing a photographing-apparatus-side processing method in the photographing processing method of the present disclosure. The steps corresponding to the steps in FIG. 2 are marked with the same reference numerals, and "-1 " is used after the reference numerals for distinction. Regarding the common parts with the flowchart of FIG. 2, the description will be omitted or simplified.

If the video recording start instruction is provided, the photographing processing method on the side of the photographing apparatus is started.

At S1-1, the communication connection with the external processing apparatus is established.

After the video recording start instruction is provided, the photographing apparatus 1 and the external processing apparatus 2 establish the communication connection.

At S2-1, the video data is obtained and the obtained video data is sent to the external processing apparatus.

In the state where the communication connection is established between the photographing apparatus 1 and the external processing apparatus 2, the photographing apparatus 1 can shoot, and the photographing member can obtain the original video data. The processing circuit (including a processor, an encoder, and the like) in the photographing apparatus 1 can perform the first processing operation on the original video data to obtain the first video data. The first video data can be sent to the external processing apparatus 2 via the communication connection.

At S3-1, the processing instruction is sent to the external processing apparatus.

During the transmission of the first video data, or before or after the transmission, the photographing apparatus 1 can send the processing instruction to the external processing apparatus 2.

The processing instruction can be used to instruct the external processing apparatus to perform the second processing operation on the first video data.

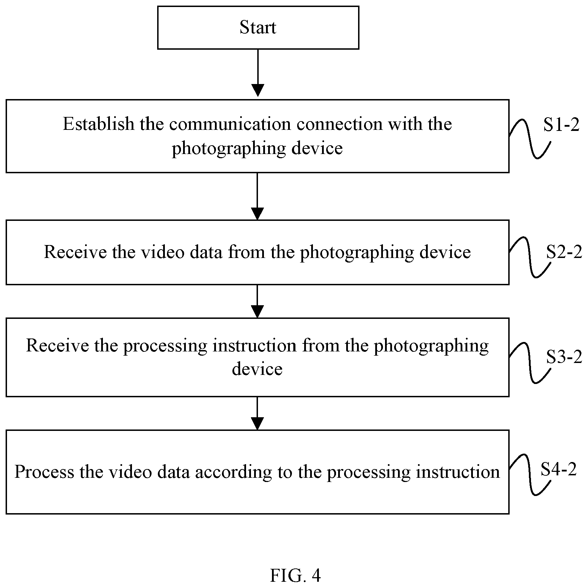

Hereinafter, the processing on the external processing apparatus side will be described with reference to FIG. 4. FIG. 4 is a flowchart showing an external-processing-apparatus-side processing method in the photographing processing method of the present disclosure. The steps corresponding to the steps in FIG. 2 are marked with the same reference numerals, and "-2" is used after the reference numerals for distinction. Regarding the common parts with the flowchart of FIG. 2, the description will be omitted or simplified.

If the video recording start instruction is provided, the photographing processing method on the external processing apparatus side can be started.

At S1-2, the communication connection with the photographing apparatus is established.

After the video recording start instruction is provided, the external processing apparatus 2 and the photographing apparatus 1 can establish the communication connection.

At S2-2, the video data is received from the photographing apparatus.

The external processing apparatus 2 can receive the first video data from the photographing apparatus 1 via the communication connection.

At S3-2, the processing instruction is received from the photographing apparatus.

The external processing apparatus 2 can receive the processing instruction from the photographing apparatus 1 via the communication connection. The processing instruction can be used to instruct the external processing apparatus to perform the second processing operation on the first video data.

Similar to the flowchart in FIG. 2, the sequence between step S2-2 and step S3-2 is not limited.

At S4-2, the video data is processed according to the processing instruction.

The external processing apparatus 2 can perform the second processing operation on the first video data according to the processing instruction to obtain the second video data.

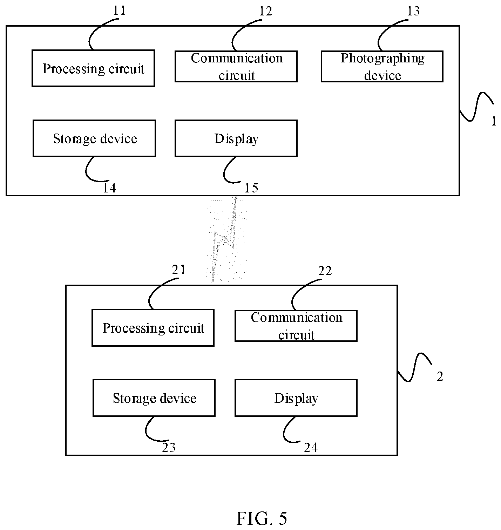

Herein, a photographing processing system of the present disclosure will be described with reference to FIG. 5. FIG. 5 is a block diagram showing a photographing processing system of the present disclosure. Only the functional units related to the present disclosure are shown in FIG. 5.

The photographing apparatus 1 includes a processing circuit 11, a communication circuit 12, a photographing device 13, and a storage device 14. The display 15 may also be provided according to needs.

The processing circuit 11 can perform the processing by executing a program stored in the storage device 14, and can be configured to perform the first processing operation on the original video data obtained by a photographing operation of the photographing device 13 to obtain the first video data.

The communication circuit 12 can be configured to send and receive data and instructions with the external processing apparatus 2 and send the first video data to the external processing apparatus 2 via the communication connection, receive the second video data from the external processing apparatus 2, and send and receive various instructions with the external processing apparatus 2. The data or instructions can be also sent and received with other external devices or the Internet.

The photographing device 13 can be configured to obtain the original video data, and in addition to the photographing function unit, it may also include a mechanical function member that can change a photographing angle of the photographing function unit.

The storage device 14 can be configured to store the original video data, the first video data, or the second video data sent from the external processing apparatus 2, and the like, and also store programs, data, settings, parameters, and the like, for the processing circuit 11 to execute the processing.

The display 15 can display the video as needed, and can display the original video data, the first video data, or the second video data.

The external processing apparatus 2 includes a processing circuit 21, a communication circuit 22, and a storage device 23. The display 24 may also be provided as needed.

The processing circuit 21 can perform the processing by executing a program stored in the storage device 23 for performing the second processing operation on the first video data from the photographing apparatus 1.

The communication circuit 22 can be configured to send and receive the data and instructions with the photographing apparatus 1, receive the first video data from the photographing apparatus 1, send the second video data back to the photographing apparatus 1, and send and receive the instructions with the photographing apparatus 1. The data or instructions can be sent and received with other external devices or the Internet.

The storage device 23 can be configured to store the second video data, and may also store the first video data as needed, and also store programs, data, settings, parameters, and the like, used to causing the processor 21 to execute the processing.

The display 24 can display the second video data.

In addition, the second video data can be played back on the external processing apparatus 2 in real time, such that the user can watch the second video data in real time or with a delay.

In addition, the photographing apparatus 1 may also send a push instruction to the external processing apparatus 2, so that the external processing apparatus 2 can send the second video data back to the photographing apparatus 1 in real time via the communication connection, and the sent back second video data can be stored in the photographing apparatus 1.

In this case, the photographing apparatus 1 may be provided with the display function, such that the second video data can be displayed on the photographing apparatus 1 in real time or via playback, and the user can watch the second video data in real time or with a delay.

In the present disclosure, the second processing operation can be implemented by the external processing apparatus 2 (e.g., a mobile phone) executing the application program installed in it, but it is just an example. For example, a dedicated chip installed in the external processing apparatus 2 may be used to perform the second processing operation.

In addition, the transmission of the first video data to the external processing apparatus 2 may be real-time or with a delay.

In addition, the processing instruction can be sent to the external processing apparatus 2 in real time, and the external processing apparatus 2 can perform real-time processing on the first video data. For example, different new processing instructions can be sent to cause the external processing apparatus 2 to change the processing being performed.

In addition, in the present disclosure, the processing can be performed automatically after the user provides a start instruction, or it can wait for further instructions from the user after performing part of the processing, and then perform the next processing after receiving further instructions. For example, the user may input the processing instruction to the external processing apparatus 2, and after receiving the processing instruction from the user, the external processing apparatus 2 can process the first video data.

In the embodiments described above, various instructions can be sent from the photographing apparatus 1 to the external processing apparatus 2, but the user can also operate on the external processing apparatus 2. Various instructions can be input to the external processing apparatus 2 to cause the external processing apparatus 2 to operate, and the external processing apparatus 2 can be caused to send related instructions such as a photographing start instruction to the photographing apparatus 1 via the communication connection.

Consistent with the disclosure, a terminal such as a mobile phone can be used to share the large amount of processing and complex processing to obtain the high-quality video stream with complex effects, thereby satisfying the user's needs to watch the high-quality video streams with complex effects from small, light-weight cameras such as sports cameras and aerial cameras.

An effect of the present disclosure is better especially for a photographing apparatus outputting the high-definition video.

In addition, the present disclosure can also be implemented as a storage medium recording a program that causes a processor to execute the photographing processing method of the present disclosure. The storage medium may be a storage medium in the photographing apparatus 1 and/or the external processing apparatus 2, and the processor may be a processor in the photographing apparatus 1 and the external processing apparatus 2.

It should be noted that the computer-readable medium shown in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof.

More specific examples of computer-readable storage media may include, but are not limited to, electrical connections with one or more wires, portable computer disks, hard disks, random access memory (RAM), read-only memory (ROM), erasable Programmable read-only memory (EPROM or flash memory), optical fiber, portable compact disk read-only memory (CD-ROM), optical storage device, magnetic storage device, or any suitable combination thereof. In the present disclosure, a computer-readable signal medium may include a data signal propagated in a baseband or as a part of a carrier wave carried computer-readable program codes. The propagated data signal can use many forms, including, but not limited to, an electromagnetic signal, optical signal, or any suitable combination thereof. The computer-readable signal medium may also be any computer-readable medium other than the computer-readable storage medium. The computer-readable medium may send, propagate, or transmit the program for use by or used in conjunction with an instruction execution system, apparatus, or device. The program code contained on the computer-readable medium can be transmitted by any suitable medium, including, but not limited to, wireless, wire, optical cable, RF, and the like, or any suitable combination thereof.

The flowcharts and block diagrams in the accompanying drawings illustrate the possible implementation architecture, functions, and operations of the system, method, and computer program product according to various embodiments of the present disclosure. At this point, each block in the flowcharts or block diagrams can represent a module, a program segment, or a piece of codes. The module, program segment, or piece of the codes described above can contain one or more executable instructions for realizing the specified logic function. It should also be noted that, in some alternative implementations, the functions represented in the blocks may also occur in an order different from the order represented in the drawings. For example, two blocks shown in succession can actually be executed substantially in parallel, and they can sometimes be executed in a reverse order, depending on the functions involved. It should also be noted that each block in the block diagrams or flowcharts, and a combination of blocks in the block diagrams or flowcharts, can be implemented by a dedicated hardware-based system that performs the specified function or operation, or can be implemented by a combination of dedicated hardware and computer instructions.

The embodiments of the present disclosure have been described above. However, these examples are merely for illustrative purposes, and are not intended to limit the scope of the present disclosure. Although the various embodiments are described above separately, this does not mean that the implementations in the various embodiments cannot be advantageously combined. The scope of the present disclosure is defined by the appended claims and their equivalents. Alterations and modifications of the above-described embodiments may be made by those skilled in the art without departing from the scope of the present disclosure, and these alterations and modifications should fall within the scope of the present disclosure.

A portion of the disclosure of this patent document (e.g., the claims, description, drawings, and abstract) contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

## Claims

1. A video photographing processing method, **characterized in that**, the photographing processing method includes:
establishing a communication connection between a photographing apparatus and an external processing apparatus;
sending, by the photographing apparatus, obtained first video data to the external processing apparatus;
sending, by the photographing apparatus, a processing instruction to the external processing apparatus, the processing instruction instructing the external processing apparatus to process the first video data; and
processing, by the external processing apparatus, the first video data according to the processing instruction.

2. The video photographing processing method according to claim 1, **characterized in that**,
in order to obtain the first video data, perform:
obtaining original video data; and
performing a first processing operation on the original video data to obtain the first video data.

3. The video photographing processing method according to claim 2, **characterized in that**,
the first processing operation includes at least one of the following: compression encoding and image clipping.

4. The video photographing processing method according to claim 2, **characterized in that**,
processing, by the external processing apparatus, the first video data includes: performing, by the external processing apparatus, a second processing operation on the first video data.

5. The video photographing processing method according to claim 4, **characterized in that**,
the second processing operation is different from the first processing operation.

6. The video photographing processing method according to claim 4, **characterized in that**,
the second processing operation includes at least one of the following: beautification processing, filter processing, and special effect overlay processing.

7. The video photographing processing method according to claim 4, **characterized in that**,
computing resources required by the second processing operation are greater than computing resources required by the first processing operation.

8. The video photographing processing method according to claim 4, **characterized in that**,
an image processing speed of the external processing apparatus is greater than an image processing speed of the photographing apparatus.

9. The video photographing processing method according to claim 1, **characterized in that**,
the video photographing processing method further includes:
the external processing apparatus processing the first video data in real time to generate second video data.

10. The video photographing processing method according to claim 9, **characterized in that**,
the video photographing processing method further includes:
sending, by the photographing apparatus, a push instruction to the external processing apparatus, the push instruction instructing the external processing apparatus to send the second video data back to the photographing apparatus in real time;
storing, by the photographing apparatus, the second video data.

11. The video photographing processing method according to claim 9, **characterized in that**,
the video photographing processing method further includes:
sending, by the photographing apparatus, a storage instruction to the external processing apparatus, the storage instruction instructing the external processing apparatus to store the second video data.

12. The video photographing processing method according to claim 1, **characterized in that**,
the external processing apparatus is a mobile terminal detachably connected to the photographing apparatus.

13. The video photographing processing method according to claim 12, **characterized in that**,
the mobile terminal includes at least one of the following: a mobile phone and a tablet computer.

14. The video photographing processing method according to claim 1, **characterized in that**,
the photographing apparatus includes a gimbal and an image acquisition device arranged at the gimbal, and the gimbal is configured to adjust a photographing angle of the image acquisition device.

15. The video photographing processing method according to claim 14, **characterized in that**,
the photographing apparatus further includes a mobile platform carrying the gimbal, the mobile platform includes at least one of the following: an unmanned aerial vehicle (UAV), a handle, and a remote-control vehicle.

16. The video photographing processing method according to claim 1, **characterized in that**,
the external processing apparatus includes a terminal device,
the processing is implemented by the terminal device executing an application program installed in the terminal device.

17. The video photographing processing method according to claim 16, **characterized in that**,
the terminal device includes at least one of the following: a mobile phone, a tablet computer, and a personal computer.

18. The video photographing processing method according to claim 1, **characterized in that**,
the photographing apparatus includes a sports camera or an aerial camera.

19. The video photographing processing method according to claim 16, **characterized in that**,
the external processing apparatus includes a terminal device having a display function,
the terminal device displays a second video signal in real time or via playback.

20. The video photographing processing method according to claim 9, **characterized in that**,
the photographing apparatus includes a photographing apparatus having a display function,
the photographing apparatus displays a second video signal in real time or via playback.

21. The video photographing processing method according to claim 1, **characterized in that**,
the first video data is sent to the external processing apparatus in real time.

22. The video photographing processing method according to claim 1, **characterized in that**,
the processing instruction is sent to the external processing apparatus in real time, and the external processing apparatus processes the first video data in real time.

23. The video photographing processing method according to claim 1, **characterized in that**,
a user inputs the processing instruction to the external processing apparatus,
the external processing apparatus processes the first video data according to the processing instruction input by the user.

24. A video photographing processing method applied to a photographing apparatus capable of establishing a communication connection with an external processing apparatus, **characterized in that**,
the video photographing processing method includes:
establishing the communication connection with the external processing apparatus;
obtaining first video data;
sending the first video data to the external processing apparatus; and
sending a processing instruction to the external processing apparatus, the processing instruction instructing the external processing apparatus to process the first video data.

25. The video photographing processing method according to claim 24, **characterized in that**,
in order to obtain the first video data, perform:
obtaining original video data; and
performing a first processing operation on the original video data to obtain the first video data.

26. The video photographing processing method according to claim 25, **characterized in that**,
the first processing operation includes at least one of the following: compression encoding and image clipping.

27. The video photographing processing method according to claim 25, **characterized in that**,
processing, by the external processing apparatus, the first video data includes: performing, by the external processing apparatus, a second processing operation on the first video data.

28. The video photographing processing method according to claim 27, **characterized in that**,
the second processing operation is different from the first processing operation.

29. The video photographing processing method according to claim 27, **characterized in that**,
the second processing operation includes at least one of the following: beautification processing, filter processing, and special effect overlay processing.

30. The video photographing processing method according to claim 27, **characterized in that**,
computing resources required by the second processing operation are greater than computing resources required by the first processing operation.

31. The video photographing processing method according to claim 27, **characterized in that**,
an image processing speed of the external processing apparatus is greater than an image processing speed of the photographing apparatus.

32. The video photographing processing method according to claim 24, **characterized in that**,
the photographing processing method further includes:
the external processing apparatus processing the first video data in real time to generate second video data.

33. The video photographing processing method according to claim 32, **characterized in that**,
the video photographing processing method further includes:
sending, by the photographing apparatus, a push instruction to the external processing apparatus, the push instruction instructing the external processing apparatus to send the second video data back to the photographing apparatus in real time;
storing, by the photographing apparatus, the second video data.

34. The video photographing processing method according to claim 24, **characterized in that**,
the video photographing processing method further includes:
sending, by the photographing apparatus, a storage instruction to the external processing apparatus, the storage instruction instructing the external processing apparatus to store the second video data.

35. The video photographing processing method according to claim 24, **characterized in that**,
the external processing apparatus is a mobile terminal detachably connected to the photographing apparatus.

36. The video photographing processing method according to claim 35, **characterized in that**,
the mobile terminal includes at least one of the following: a mobile phone and a tablet computer.

37. The video photographing processing method according to claim 23, **characterized in that**,
the photographing apparatus includes a gimbal and an image acquisition device arranged at the gimbal, and the gimbal is configured to adjust a photographing angle of the image acquisition device.

38. The video photographing processing method according to claim 37, **characterized in that**,
the photographing apparatus further includes a mobile platform carrying the gimbal, the mobile platform includes at least one of the following: an unmanned aerial vehicle (UAV), a handle, and a remote-control vehicle.

39. The video photographing processing method according to claim 24, **characterized in that**,
the external processing apparatus includes a terminal device,
the processing is implemented by the terminal device executing an application program installed in the terminal device.

40. The video photographing processing method according to claim 39, **characterized in that**,
the terminal device includes at least one of the following: a mobile phone, a tablet computer, and a personal computer.

41. The video photographing processing method according to claim 24, **characterized in that**,
the photographing apparatus includes a sports camera or an aerial camera.

42. The video photographing processing method according to claim 40, **characterized in that**,
the external processing apparatus includes a terminal device having a display function,
the terminal device displays a second video signal in real time or via playback.

43. The video photographing processing method according to claim 42, **characterized in that**,
the photographing apparatus includes a photographing apparatus having a display function,
the photographing apparatus displays a second video signal in real time or via playback.

44. The video photographing processing method according to claim 24, **characterized in that**,
the first video data is sent to the external processing apparatus in real time.

45. The video photographing processing method according to claim 24, **characterized in that**,
the processing instruction is sent to the external processing apparatus in real time, and the external processing apparatus processes the first video data in real time.

46. The video photographing processing method according to claim 24, **characterized in that**,
a user inputs the processing instruction to the external processing apparatus,
the external processing apparatus processes the first video data according to the processing instruction input by the user.

47. A video photographing processing method applied to an external processing apparatus capable of establishing a communication connection with a photographing apparatus, **characterized in that**,
the video photographing processing method includes:
establishing the communication connection with the photographing apparatus;
receiving first video data sent from the photographing apparatus;
receiving a processing instruction sent from the photographing apparatus, the processing instruction instructing the external processing apparatus to process the first video data; and
processing the first video data according to the processing instruction.

48. The video photographing processing method according to claim 47, **characterized in that**,
in order to obtain the first video data, perform:
obtaining original video data; and
performing a first processing operation on the original video data to obtain the first video data.

49. The video photographing processing method according to claim 48, **characterized in that**,
the first processing operation includes at least one of the following: compression encoding and image clipping.

50. The video photographing processing method according to claim 48, **characterized in that**,
processing, by the external processing apparatus, the first video data includes: performing, by the external processing apparatus, a second processing operation on the first video data.

51. The video photographing processing method according to claim 50, **characterized in that**,
the second processing operation is different from the first processing operation.

52. The video photographing processing method according to claim 50, **characterized in that**,
the second processing operation includes at least one of the following: beautification processing, filter processing, and special effect overlay processing.

53. The video photographing processing method according to claim 50, **characterized in that**,
computing resources required by the second processing operation are greater than computing resources required by the first processing operation.

54. The video photographing processing method according to claim 50, **characterized in that**,
an image processing speed of the external processing apparatus is greater than an image processing speed of the photographing apparatus.

55. The video photographing processing method according to claim 47, **characterized in that**,
the video photographing processing method further includes:
the external processing apparatus processing the first video data in real time to generate second video data.

56. The video photographing processing method according to claim 55, **characterized in that**,
the video photographing processing method further includes:
receiving, by the external processing apparatus, a push instruction sent by the photographing apparatus, the push instruction instructing the external processing apparatus to send the second video data back to the photographing apparatus in real time;
storing, by the photographing apparatus, the second video data.

57. The video photographing processing method according to claim 55, **characterized in that**,
the video photographing processing method further includes:
receiving, by the external processing apparatus, a storage instruction sent by the photographing apparatus, the storage instruction instructing the external processing apparatus to store the second video data.

58. The video photographing processing method according to claim 47, **characterized in that**,
the external processing apparatus is a mobile terminal detachably connected to the photographing apparatus.

59. The video photographing processing method according to claim 58, **characterized in that**,
the mobile terminal includes at least one of the following: a mobile phone and a tablet computer.

60. The video photographing processing method according to claim 47, **characterized in that**,
the photographing apparatus includes a gimbal and an image acquisition device arranged at the gimbal, and the gimbal is configured to adjust a photographing angle of the image acquisition device.

61. The video photographing processing method according to claim 60, **characterized in that**,
the photographing apparatus further includes a mobile platform carrying the gimbal, the mobile platform includes at least one of the following: an unmanned aerial vehicle (UAV), a handle, and a remote-control vehicle.

62. The video photographing processing method according to claim 47, **characterized in that**,
the external processing apparatus includes a terminal device,
the processing is implemented by the terminal device executing an application program installed in the terminal device.

63. The video photographing processing method according to claim 62, **characterized in that**,
the terminal device includes at least one of the following: a mobile phone, a tablet computer, and a personal computer.

64. The video photographing processing method according to claim 47, **characterized in that**,
the photographing apparatus includes a sports camera or an aerial camera.

65. The video photographing processing method according to claim 62, **characterized in that**,
the external processing apparatus includes a terminal device having a display function,
the terminal device displays a second video signal in real time or via playback.

66. The video photographing processing method according to claim 65, **characterized in that**,
the photographing apparatus includes a photographing apparatus having a display function,
the photographing apparatus displays a second video signal in real time or via playback.

67. The video photographing processing method according to claim 47, **characterized in that**,
the first video data is sent to the external processing apparatus in real time.

68. The video photographing processing method according to claim 47, **characterized in that**,
the processing instruction is sent to the external processing apparatus in real time, and the external processing apparatus processes the first video data in real time.

69. The video photographing processing method according to claim 47, **characterized in that**,
a user inputs the processing instruction to the external processing apparatus,
the external processing apparatus processes the first video data according to the processing instruction input by the user.

70. A photographing apparatus capable of establishing a communication connection with an external processing apparatus, **characterized in that**, includes:
a processing circuit configured to obtain first video data;
a communication circuit sending the first video data to the external processing apparatus and sending a processing instruction to the external processing apparatus, the processing instruction instructing the external processing apparatus to process the first video data.

71. The photographing apparatus according to claim 70, **characterized in that**,
the photographing apparatus further includes a photographing device configured to shoot and obtain original video data;
the processing circuit performs a first processing operation on the original video data to obtain the first video data.

72. The photographing apparatus according to claim 71, **characterized in that**,
the first processing operation includes at least one of the following: compression encoding and image clipping.

73. The photographing apparatus according to claim 71, **characterized in that**,
the external processing apparatus performs a second processing operation on the first video data.

74. The photographing apparatus according to claim 73, **characterized in that**,
the second processing operation is different from the first processing operation.

75. The photographing apparatus according to claim 73, **characterized in that**,
the second processing operation includes at least one of the following: beautification processing, filter processing, and special effect overlay processing.

76. The photographing apparatus according to claim 73, **characterized in that**,
computing resources required by the second processing operation are greater than computing resources required by the first processing operation.

77. The photographing apparatus according to claim 73, **characterized in that**,
an image processing speed of the external processing apparatus is greater than an image processing speed of the photographing apparatus.

78. The photographing apparatus according to claim 70, **characterized in that**,
the external processing apparatus processes the first video data in real time to generate second video data.

79. The photographing apparatus according to claim 78, **characterized in that**,
the photographing apparatus sends a push instruction to the external processing apparatus via the communication circuit, the push instruction instructing the external processing apparatus to send the second video data back to the photographing apparatus in real time;
the photographing apparatus further includes a storage device configured to store the second video data.

80. The photographing apparatus according to claim 78, **characterized in that**,
the photographing apparatus sends a storage instruction to the external processing apparatus via the communication circuit, the storage instruction instructing the external processing apparatus to store the second video data.

81. The photographing apparatus according to claim 70, **characterized in that**,
the external processing apparatus is a mobile terminal detachably connected to the photographing apparatus.

82. The photographing apparatus according to claim 81, **characterized in that**,
the mobile terminal includes at least one of the following: a mobile phone and a tablet computer.

83. The photographing apparatus according to claim 70, **characterized in that**,
the photographing apparatus includes a gimbal and an image acquisition device arranged at the gimbal, and the gimbal is configured to adjust a photographing angle of the image acquisition device.

84. The photographing apparatus according to claim 83, **characterized in that**,
the photographing apparatus further includes a mobile platform carrying the gimbal, the mobile platform includes at least one of the following: an unmanned aerial vehicle (UAV), a handle, and a remote-control vehicle.

85. The photographing apparatus according to claim 70, **characterized in that**,
the external processing apparatus includes a terminal device,
the processing is implemented by the terminal device executing an application program installed in the terminal device.

86. The photographing apparatus according to claim 85, **characterized in that**,
the terminal device includes at least one of the following: a mobile phone, a tablet computer, and a personal computer.

87. The photographing apparatus according to claim 70, **characterized in that**,
the photographing apparatus includes a sports camera or an aerial camera.

88. The photographing apparatus according to claim 85, **characterized in that**,
the external processing apparatus includes a terminal device having a display function,
the terminal device displays a second video signal in real time or via playback.

89. The photographing apparatus according to claim 88, **characterized in that**,
the photographing apparatus further includes a display,
the display of the photographing apparatus displays a second video signal in real time or via playback.

90. The photographing apparatus according to claim 70, **characterized in that**,
the first video data is sent to the external processing apparatus in real time via the communication circuit.

91. The photographing apparatus according to claim 70, **characterized in that**,
the communication circuit sends the processing instruction the external processing apparatus in real time, and the external processing apparatus processes the first video data in real time.

92. The photographing apparatus according to claim 70, **characterized in that**,
a user inputs the processing instruction to the external processing apparatus,
the external processing apparatus processes the first video data according to the processing instruction input by the user.

93. An external processing apparatus capable of establishing a communication connection with a photographing apparatus, **characterized in that**, includes:
a communication circuit receiving first video data sent from the photographing apparatus, and receiving a processing instruction sent from the photographing apparatus, the processing instruction instructing the external processing apparatus to process the first video data; and
a processing circuit processing the first video data according to the processing instruction.

94. The external processing apparatus according to claim 93, **characterized in that**,
in order to obtain the first video data, perform at the photographing apparatus:
obtaining original video data; and
performing a first processing operation on the original video data to obtain the first video data.

95. The external processing apparatus according to claim 94, **characterized in that**,
the first processing operation includes at least one of the following: compression encoding and image clipping.

96. The external processing apparatus according to claim 94, **characterized in that**,
the external processing apparatus performs a second processing operation on the first video data.

97. The external processing apparatus according to claim 96, **characterized in that**,
the second processing operation is different from the first processing operation.

98. The external processing apparatus according to claim 96, **characterized in that**,
the second processing operation includes at least one of the following: beautification processing, filter processing, and special effect overlay processing.

99. The external processing apparatus according to claim 96, **characterized in that**,
computing resources required by the second processing operation are greater than computing resources required by the first processing operation.

100. The external processing apparatus according to claim 96, **characterized in that**,
an image processing speed of the external processing apparatus is greater than an image processing speed of the photographing apparatus.

101. The external processing apparatus according to claim 93, **characterized in that**,
the external processing apparatus processes the first video data in real time via the processing circuit to generate second video data.

102. The external processing apparatus according to claim 101, **characterized in that**,
the external processing apparatus receives, via the communication circuit, a push instruction sent by the photographing apparatus, the push instruction instructing the external processing apparatus to send the second video data back to the photographing apparatus in real time;
the photographing apparatus stores the second video data.

103. The external processing apparatus according to claim 101, **characterized in that**,
the external processing apparatus further includes a storage device,
the external processing apparatus receives a storage instruction sent by the photographing apparatus, the storage instruction instructing the external processing apparatus to store the second video data in the storage device.

104. The external processing apparatus according to claim 93, **characterized in that**,
the external processing apparatus is a mobile terminal detachably connected to the photographing apparatus.

105. The external processing apparatus according to claim 104, **characterized in that**,
the mobile terminal includes at least one of the following: a mobile phone and a tablet computer.

106. The external processing apparatus according to claim 93, **characterized in that**,
the photographing apparatus includes a gimbal and an image acquisition device arranged at the gimbal, and the gimbal is configured to adjust a photographing angle of the image acquisition device.

107. The external processing apparatus according to claim 106, **characterized in that**,
the photographing apparatus further includes a mobile platform carrying the gimbal, the mobile platform includes at least one of the following: an unmanned aerial vehicle (UAV), a handle, and a remote-control vehicle.

108. The external processing apparatus according to claim 93, **characterized in that**,
the external processing apparatus includes a terminal device,
the processing is implemented by the terminal device executing an application program installed in the terminal device.

109. The external processing apparatus according to claim 108, **characterized in that**,
the terminal device includes at least one of the following: a mobile phone, a tablet computer, and a personal computer.

110. The external processing apparatus according to claim 93, **characterized in that**,
the photographing apparatus includes a sports camera or an aerial camera.

111. The external processing apparatus according to claim 108, **characterized in that**,
the external processing apparatus includes a terminal device having a display,
the display of the terminal device displays a second video signal in real time or via playback.

112. The external processing apparatus according to claim 101, **characterized in that**,
the photographing apparatus includes a photographing apparatus having a display function,
the photographing apparatus displays a second video signal in real time or via playback.

113. The external processing apparatus according to claim 93, **characterized in that**,
the external processing apparatus receives the first video data in real time via the communication circuit.

114. The external processing apparatus according to claim 93, **characterized in that**,
the external processing apparatus receives the processing instruction in real time via the communication circuit, and the external processing apparatus processes the first video data in real time.

115. The external processing apparatus according to claim 93, **characterized in that**,
a user inputs the processing instruction to the external processing apparatus,
the external processing apparatus processes the first video data according to the processing instruction input by the user.

116. A video photographing processing system including a photographing apparatus and an external processing apparatus, the photographing apparatus and the external processing apparatus being capable of establishing a communication connection, **characterized in that**,
the photographing apparatus includes:
a photographing-apparatus-side processing circuit configured to obtain first video data;
a photographing-apparatus-side communication circuit sending the first video data to the external processing apparatus and sending a processing instruction to the external processing apparatus, the processing instruction instructing the external processing apparatus to process the first video data;
the external processing apparatus includes:
an external-processing-apparatus-side communication circuit receiving the first video data sent from the photographing apparatus, and receiving the processing instruction sent from the photographing apparatus, and
an external-processing-apparatus-side processing circuit processing the first video data according to the processing instruction.
